# EUROPEAN PATENT SPECIFICATION

(11) **EP 4 385 858 B1**
(45) Date of publication and mention of the grant of the patent: **04.11.2026**
(21) Application number: 22855098.4
(22) Date of filing: 28.06.2022
(51) Int. Cl.: B62D 21/02, B60K 1/04, H01M 50/233, H01M 50/244, H01M 50/271, H01M 50/249, H01M 50/264, H01M 50/209, B62D 25/20, B62D 25/02

(54) **LOWER VEHICLE BODY MIDDLE STRUCTURE AND VEHICLE**
UNTERE FAHRZEUGKAROSSERIEMITTELSTRUKTUR UND FAHRZEUG
STRUCTURE INFÉRIEURE INTERMÉDIAIRE DE CARROSSERIE DE VÉHICULE ET VÉHICULE

(30) Priority: 13.08.2021 CN 202110931769
(43) Date of publication of application: 19.06.2024
(73) Proprietor: Great Wall Motor Company Limited, Hebei 071000 (CN)
(72) Inventor: LIANG, Xinyu, Baoding, Hebei 071000 (CN); HE, Zhijie, Baoding, Hebei 071000 (CN); ZHANG, Tao, Baoding, Hebei 071000 (CN); ZHANG, Shuren, Baoding, Hebei 071000 (CN); CHEN, Qiang, Baoding, Hebei 071000 (CN); WU, Wenbo, Baoding, Hebei 071000 (CN); LI, Ren, Baoding, Hebei 071000 (CN); LI, Yang, Baoding, Hebei 071000 (CN); LI, Yuntao, Baoding, Hebei 071000 (CN)
(74) Representative: Klunker IP Patentanwälte PartG mbB
(86) International application number: PCT/CN2022/101951
(87) International publication number: WO 2023/016113

(56) References cited:
- CN-A- 106 114 296
- CN-A- 110 329 362
- CN-U- 215 883 294
- DE-A1- 10 224 884
- DE-A1- 10 248 846
- US-A1- 2013 088 044
- US-A1- 2014 338 999

## Description

### TECHNICAL FIELD

The present invention relates to the technical field of body structures, in particular to a lower vehicle-body middle structure, and a vehicle provided with the lower vehicle-body middle structure.

### BACKGROUND

With development of technology of electric vehicles, an endurance mileage required for an electric vehicle is also increasingly larger. Except for increase in energy density of a power battery, a vehicle body also needs to be provided with enough space for layout of the power battery.

For existing electric vehicles, a battery pack is generally provided in a front engine room or at a bottom of the vehicle body. When the battery pack is provided at the bottom of the vehicle body, the whole battery pack is generally mounted under a floor of the vehicle. In related art, a front floor of the vehicle and a sealing cover of the battery pack are two separate parts, and a matching gap is required between the two separate parts, and a reserved gap of 10 to 20 mm is required to avoid interference or abnormal sound, which sacrifices space utilization ratio in a height direction of the vehicle. Moreover, due to a general layout requirement, the front floor often needs to be provided with mounting points for many modules, but due to limitation of sheet metal stamping processes, it can only be welded with small split brackets. This type of front floor assembly, on the one hand, adds a welding process, and on the other hand results in a large weight of the front floor assembly.

Although some housing structures of the battery pack that are integrated with an underbody frame and the floor of the vehicle exist in some of current designs, there are some shortcomings in a layout structure of a sill beam, a transverse beam and the floor of the vehicle, such as an unreasonable spatial layout, weak connection and support strength, poor side-impact resistance of the sill beam, poor protective performance of the battery pack and others. It is urgent to improve a structure and performance of a housing of the battery pack integrated with the vehicle body through optimization design.

Because an outer housing of the battery pack is integrated in a frame structure in the middle of a lower vehicle body, overall strength of the frame structure may be affected. Therefore, it is necessary to perform detailed optimization research and design for this type of the lower vehicle-body middle structure.

CN 110 329 362 A discloses a vehicle body middle structure having a battery pack mounting frame for receiving a battery pack to be fixedly connected to the battery pack mounting frame, wherein the battery pack mounting frame is constituted by the left and the right sill, and a front and a rear beam of the vehicle body middle structure. The battery pack comprises a battery pack sealing cover, a battery tray, bottom panel, a battery tray front side beam, a battery tray rear side beam, a battery tray left side longitudinal beam, a left side rail body of battery tray, a first vertical extension, a first horizontal extension, a right side rail of battery tray, a battery tray panel left reinforcement, a battery tray left side rail lower cover, a battery tray right side beam lower cover, a reinforcing beam structure, a reinforcing beam, a reinforcing stringer all together defining a sealed space for accommodating battery modules.

### SUMMARY

In view of this, it is an object of the present invention to provide a lower vehicle-body middle structure to optimize an overall arrangement structure of a body frame in the middle of a lower vehicle body integrated with a housing of a battery pack, and a vehicle comprising the lower vehicle-body middle structure.

The object is achieved with the features of the independent claim 1. Further embodiments are defined in the dependent claims.

Compared with the prior art, the present invention has following advantages.

For the lower vehicle-body middle structure according to the present invention, the outer housing of the battery pack is constructed by the sill beams, the overlap beams, the transverse beam, the lower housing of the battery pack and the floor panel together. The sill beams, the overlap beams and the transverse beam constitute a bearing frame of the battery pack, and combined with arrangement of the reinforcing longitudinal beam, overall bearing strength of the battery pack is guaranteed. The floor panel not only exerts original floor function, but also serves as an upper cover of the battery pack, which improves utilization of space, thus providing a good housing arrangement structure of the battery pack integrated with the vehicle body.

In addition, a plurality of beam structures can be provided corresponding to a front seat and a rear seat, thereby improving overall strength of the floor of the vehicle body and facilitating arrangement of vehicle seats. The rear transverse beam of the front seat adopts an integrated beam body structure, which is designed in two parts, the upper beam body and the lower beam body, which are staggered along a front-and-rear direction, and the upper beam body and the lower beam body are integrally connected through the intermediate connecting plate. With provision of a top mounting part of the upper beam body and a bottom connecting part of the lower beam body, the vehicle seats above and the lower housing of the battery pack below can be fixedly connected to the integrated beam body, so that a housing of the battery pack and a frame of the vehicle body can be integrally connected, and the integrated beam body can bear assembly of the housing of the battery pack while exerting basic bearing and connecting functions.

### BRIEF DESCRIPTION OF THE DRAWINGS

The drawings which form a part of the present application, are used to provide a further understanding of the present invention. Illustrative embodiments of the present invention and their descriptions are intended to explain the present invention in which related directional words such as front, rear, above and below are only used to express a relative positional relationship, and not constructed as undue limitations on the present invention which is defined in the claims. In the drawings:
FIG. 1 is a schematic diagram of an overall arrangement structure of a lower vehicle-body middle structure;
FIG. 2 is a schematic structural diagram of a lower vehicle-body middle structure in which a sill beam at one side is removed;
FIG. 3 is a schematic structural diagram of a lower vehicle-body middle structure in which a floor panel and a sill beam at one side are removed;
FIG. 4 is a schematic diagram of an arrangement structure of a frame of a lower housing of a battery pack and a reinforcing longitudinal beam in the lower vehicle-body middle structure;
FIG. 5 is a schematic diagram of a three-dimensional structure of a portion of transverse beams;
FIG. 6 is a schematic diagram of a three-dimensional structure of an integrated beam body;
FIG. 7 is a schematic structural diagram of an integrated beam body;
FIG. 8 is a schematic structural diagram of a reinforcing plate;
FIG. 9 is a schematic diagram of a three-dimensional structure of a sill beam;
FIG. 10 is a schematic diagram of upward inclination angles of a first top wall, a second top wall and a third top wall;
FIG. 11 is a schematic diagram of lateral distances of a first top wall, a second top wall and a third top wall;
FIG. 12 is a schematic diagram of a three-dimensional structure of a sill beam from a lower perspective; and
FIG. 13 is a schematic diagram of a cross-sectional structure of the sill beam shown in FIG. 12.

Description of reference numerals:
100. sill beam; 101. front end; 102. rear end;
1. outer side wall; 2. inner side wall; 200. lap boss of floor transverse beam;
3. top; 4. bottom; 5. first top wall; 6. second top wall; 670. connection point; 7. third top wall; 8. first vertical bar; 9. second vertical rib; 10. third vertical rib; 11. fourth vertical rib; 12. first transverse rib; 13. first inclined rib;
14. lifting pad; 140. cavity; 141. groove; 142. through hole;
15. fixing groove for brake pipe; 150. fixing hole; 16. lower convex part; 160. lower side plate; 161. bottom end; 162. insertion hole; 163. mounting sleeve;
20. overlap beam; 30. lower housing of battery pack; 301. frame; 302. support beam; 303. bottom plate; 31. floor panel; 310. reinforcing rib;
40. transverse beam; 401. front transverse beam of front seat; 402, rear transverse beam of front seat; 403. connecting transverse beam of rear floor;
45. upper beam body; 46. lower beam body; 450. intermediate connecting plate; 451. projection welding nut; 452. riveting piece.
50. reinforcing longitudinal beam; 501. longitudinal beam front section; 502. longitudinal beam rear section;
51. upper cavity; 510. mounting hole; 52. upper partition; 53. upper reinforcing plate; 530. mounting through hole; 560. sub-cavity;
600. connecting hole; 61. upper part of lower beam body; 611. first lower cavity; 612. second lower cavity; 613. side wall; 614. lower partition; 62. lower part of lower beam body; 621. lower reinforcing plate.

### DETAILED DESCRIPTION

It should be noted in the description of the present application that if terms such as "upper", "lower", "inner" and "rear" appear to indicate an orientation or positional relationship, they are based on orientation or positional relationships shown in the drawings, only facilitate describing of the present application and simplifying the description, rather than indicate or imply that the device or element referred to must have a specific orientation, be configured and operated in a specific orientation, and thus cannot be understood as a limitation on the present application. Terms "first" and "second" are only used for descriptive purposes and cannot be understood as indicating or implying relative importance.

In addition, in description of the present application, unless otherwise specified, terms "mounting", "connecting", "coupling" and "connector" should be understood in a broad sense. For example, "connecting" can be "fixedly connecting", or "detachably connecting" or "integrally connecting", or it can be "mechanically connecting" or "electrically connecting", or it can be "directly connecting" or "indirectly connecting through an intermediate medium", or it can be "communicating within two elements". For those ordinary skilled in the art, the specific meanings of the above terms in this application can be understood in connection with specific situations.

The present invention will be described in detail with reference to drawings and in combination with embodiments.

This embodiment relates to a lower vehicle-body middle structure, which optimizes an overall arrangement structure of a body frame of the lower vehicle-body middle structure integrated with a housing of a battery pack, thereby improving integration of the lower vehicle-body middle structure and the battery pack and improving overall strength of the structure.

The lower vehicle-body middle structure includes sill beams respectively arranged at two sides, at least two overlap beams connected between the sill beams at the two sides, and a lower housing of a battery pack connected to bottoms of respective sill beams and respective overlap beams. In addition, the lower vehicle-body middle structure further includes a transverse beam connected between the sill beams at the two sides, there are a plurality of transverse beams arranged at intervals between the sill beams at the two sides, and floor panels are respectively provided at a front side and a rear side of each transverse beam.

The sill beams, the overlap beams, the transverse beams, the floor panels and the lower housing of the battery pack together form an outer housing of the battery pack. A plurality of top walls are provided at an upper part of the sill beam sequentially in an inward direction from an outer side of the sill beam, and the plurality of top walls are all arranged to be inclined upward, and upward inclination angles of respective top walls increase sequentially. At least one of the plurality of transverse beams is an integrated beam body, and the integrated beam body includes an upper beam body and a lower beam body which are integrally connected through an intermediate connecting plate. The upper beam body and the lower beam body are staggered along a front-and-rear direction of a vehicle body. A seat mounting part for mounting a seat is provided at a top of the upper beam body, and a connecting part for connecting the lower housing of the battery pack is provided at a bottom of the lower beam body.

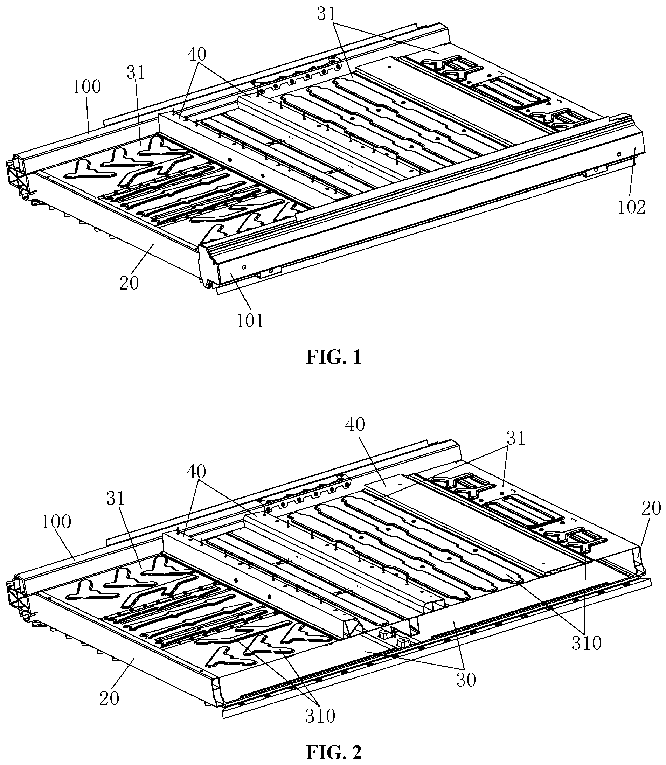

Based on above design idea, an exemplary structure of the lower vehicle-body middle structure is shown in FIG. 1 and FIG. 2, which mainly includes a sill beam 100, a overlap beam 20, a lower housing of a battery pack 30, a transverse beam 40, a floor panel 31, a reinforcing longitudinal beam 50, and the like.

Two sill beams 100 are arranged in a left-and-right direction, and specifically, two overlap beams 20 are respectively connected between front ends 101 of the sill beams 100 at the two sides and between rear ends 102 of the sill beams at the two sides. Three groups of transverse beams 40 are connected between the two sill beams 100 at positions near their middles.

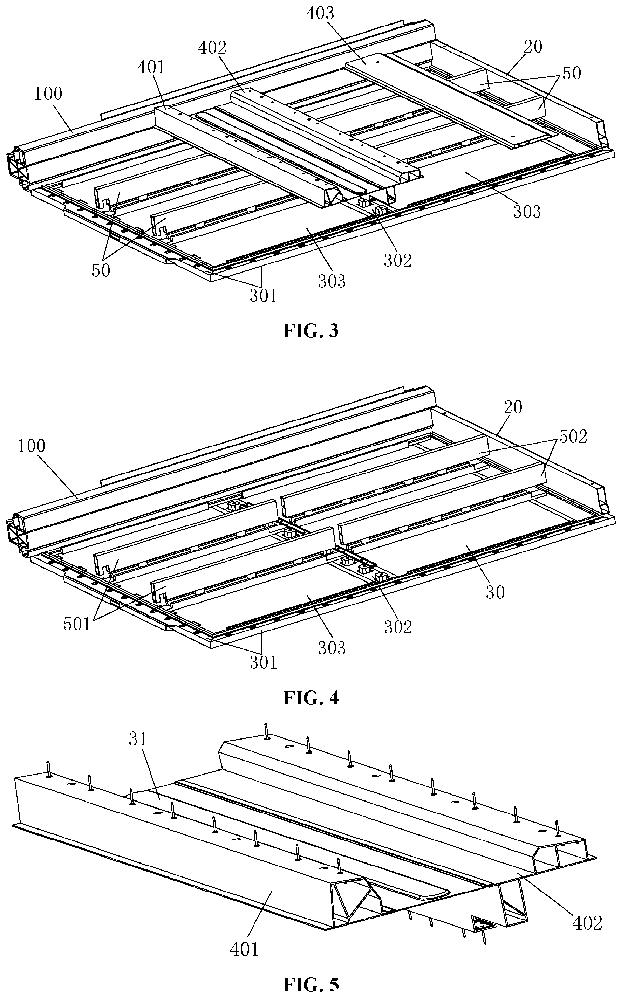

As shown in FIG. 3 combined with FIG. 4, on a basis of a frame constructed by above beam bodies, the lower housing 30 of the battery pack is fixedly installed at a bottom of the frame, and a floor panel 31 is arranged at a top of the frame. In this way, the sill beams 100, the overlap beams 20, the transverse beam 40, the floor panel 31 and the lower housing 30 of the battery pack together form the outer housing of the battery pack. In addition, a plurality of reinforcing longitudinal beams 50 are arranged parallel to the sill beam 100 inside the outer housing of the battery pack, and a front end and a rear end of the reinforcing longitudinal beam 50 are respectively connected to the overlap beam 20 at a corresponding end.

In a specific structural arrangement, preferably there are two reinforcing longitudinal beams 50 arranged side by side. The two reinforcing longitudinal beams 50 are arranged side by side to divide an interior of the battery pack into a plurality of battery assembly spaces, which can further improve overall structural strength and load-bearing performance of the battery pack. Moreover, the reinforcing longitudinal beam 50 is designed with a smaller cross-sectional size, with a small width and a small height, thus avoiding a problem that a traditional longitudinal beam of a floor occupies too much space of the battery pack, and at the same time achieving supporting effect against front impact.

As shown in FIG. 5, for arrangement and a specific structure of the transverse beam 40, a following form is preferred. Three groups of transverse beams 40 are arranged between the two sill beams 100, namely, a front transverse beam 401 of a front seat and a rear transverse beam 402 of the front seat respectively located at a middle part and below the front seat, and a connecting transverse beam 403 of a rear floor located close to a rear end 102 of the sill beam 100. A plurality of beam structures can be provided corresponding to the front seat and the rear seat, thereby improving overall strength of the floor of the body and facilitating arrangement of vehicle seats.

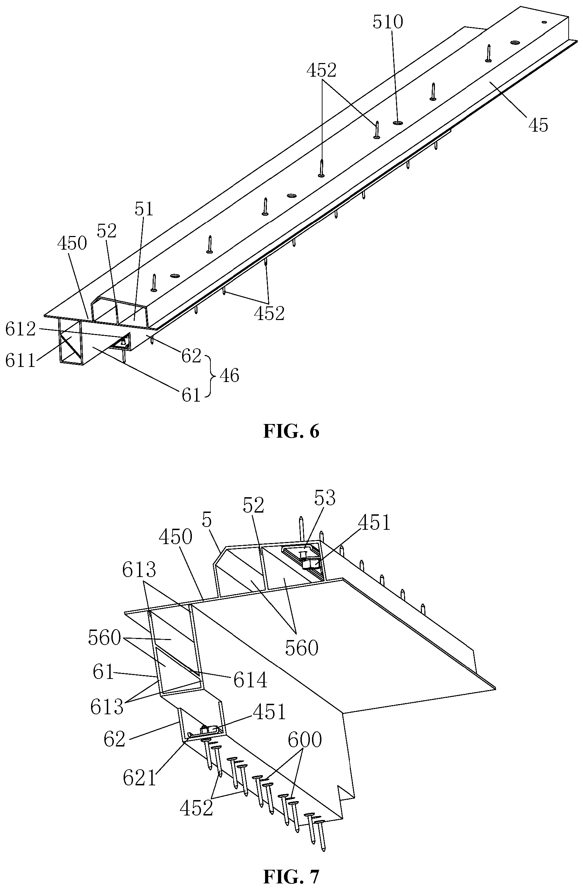

As shown in FIG. 6, the rear transverse beam 402 of the front seat adopts an integrated beam body, which includes an upper beam body 45 and a lower beam body 46 integrally connected by an intermediate connecting plate 450, and the upper beam body 45 and the lower beam body 46 are staggered along a front-and-rear direction of a vehicle body. A seat mounting part for mounting a seat is provided at a top of the upper beam body 45, and a connecting part for connecting the lower housing 30 of the battery pack is provided at a bottom of the lower beam body 46.

With this arrangement, the upper beam body 45 of the rear transverse beam 402 of the front seat, the front transverse beam 401 of the front seat and the connecting transverse beam 403 of the rear floor are all located above the floor panel 31, while the lower beam body 46 of the rear transverse beam 402 of the front seat extends into the outer housing of the battery pack and crosses respective reinforcing longitudinal beams 50. In this way, a transverse beam in a traditional battery pack is replaced with the lower beam body 46, and good supporting is made inside the battery pack.

A specific structure of the integrated beam body used for the rear transverse beam 402 of the front seat is shown in FIG. 6, FIG. 7 and FIG. 8.

The integrated beam body mainly includes the upper beam body 45, the lower beam body 46 and the intermediate connecting plate 450. The upper beam body 45 and the lower beam body 46 are staggered along the front-and-rear direction of the vehicle body, the upper beam body 45 is arranged at an upper side of the intermediate connecting plate 450, and the lower beam body 46 is arranged at a lower side of the intermediate connecting plate 450. Moreover, the mounting part is provided at the top of the upper beam body 45, and the connecting part is provided at the bottom of the lower beam body 46. The mounting part and the connecting part are respectively used for mounting and connecting members located above and below the integrated beam body.

In a specific structural form, the upper beam body 45 is buckled above the intermediate connecting plate 450, and encloses with the intermediate connecting plate 450 to form an upper cavity 51. Provision of the upper cavity 51 can effectively reduce self-weight of the upper beam body 45. A plurality of upper partitions 52 are connected inside the upper cavity 51, that is, between a wall body of the upper beam body 45 and the intermediate connecting plate 450, thereby dividing the upper cavity 51 into a plurality of sub-cavities 560. By arranging the plurality of upper partitions 52 in the upper cavity 51 of the upper beam body 45, overall strength of the upper beam body 45 can be effectively improved, thereby improving connection and bearing performance of the upper beam body 45.

The above mounting part can be provided as a plurality of mounting holes 510 located at a top end of the upper beam body 45, so as to facilitate mounting and fixing of members above. As for a specific connection mode, as shown in FIG. 3, an upper reinforcing plate 53 is fixedly connected in the upper beam body 45, and the upper reinforcing plate 53 is provided with mounting through holes 530 in one-to-one correspondence with a plurality of mounting holes 510, and meanwhile, a projection welding nut 451 is fixedly provided at respective mounting holes 530. In this way, the members above are screwed into the projection welding nut 451 by bolts, and thus the members can be fastened to the upper beam body 45.

By arranging the upper reinforcing plate 53 in the upper cavity 51, especially when the upper beam body 45 is extruded from aluminum alloy, connection strength of the mounting part can be greatly improved. The projection welding nut 451 is arranged at the mounting hole 530 of the upper reinforcing plate 53, which facilitates connection of the members above with the upper reinforcing plate 53 by screwing, and the upper reinforcing plate 53 can evenly transmit a connected force to the whole upper beam body 45, thus ensuring connection reliability. In order to ensure strength of the upper reinforcing plate 53 itself, it can be made of steel sheet metal.

Certainly, in order to fix the upper reinforcing plate 53 in the upper cavity 51 in advance, a connecting structure should be provided between the upper reinforcing plate and the upper cavity first, in a welding, screwing or other manners. Preferably, the upper reinforcing plate 53 is provided with a riveting piece 452, and the upper beam body 45 is provided with riveting holes, and the upper reinforcing plate 53 is fixedly connected to the upper beam body 45 through the riveting piece 452. The riveting piece 452 is configured to connect the upper reinforcing plate 53 and the upper beam body 45, which can be adapted to connection requirements of two different materials. For example, the upper reinforcing plate 53 is made of steel plates and the upper beam body 45 is made of aluminum profiles, and good connection and fixation of the upper reinforcing plate and the upper beam body can be formed by riveting, which facilitates subsequent connection and mounting between the members and the upper beam body 45.

As for a structural form of the lower beam body 46, as shown in FIG. 1 and FIG. 2, the lower beam body 46 includes an upper part 61 of the lower beam body buckled on the intermediate connecting plate 450 and a lower part 62 of the lower beam body buckled on a bottom of the upper part 61 of the lower beam body. A length of the lower part 62 of the lower beam body is less than a length of the upper part 61 of the lower beam body. Meanwhile, a wall body of the upper part 61 of the lower beam body and the intermediate connecting plate 450 enclose to form a first lower cavity 611, and the lower part 62 of the lower beam body and the upper part 61 of the lower beam body enclose to form a second lower cavity 612. The connecting part located at the bottom of the lower part 62 of the lower beam body can also be designed as a hole structure, including a plurality of connecting holes 600.

The lower beam body 46 is provided in two parts, the upper part 61 of the lower beam body and the lower part 62 of the lower beam body, arranged in an up-and-down direction, which can form stable mounting and connection foundation at the bottom of the lower beam body 46 and facilitates assembly of the members below. At this moment, the upper beam body 45 is located outside the battery pack, while the lower beam body 46 enters the housing of the battery pack and forms the connecting part at its bottom, which provides a good assembly condition for connection of the integrated beam body with the longitudinal beam in the housing of the battery pack and the lower housing 30 of the battery pack. Moreover, in a height direction of the vehicle body, the length of the lower part 62 of the lower beam body is less than the length of the upper part 61 of the lower beam body, and thus a firm connection structure can be formed at the connecting part.

In addition, similar to a cavity partition structure in the upper cavity 51, a lower partition plate 614 fixedly connected between two side walls 613 of the upper part 61 of the lower beam body is arranged in the first lower cavity 611, thereby dividing the second lower cavity 612 into a plurality of sub-cavities 560. By providing the lower partition plate 614 in the second lower cavity 612, overall strength of the upper part 61 of the lower beam can be improved, thereby enhancing bearing capacity of the upper part 61 of the lower beam.

Similar to mounting at the mounting part, a lower reinforcing plate 621 is fixedly connected in the lower part 62 of the lower beam body. The lower reinforcing plate 621 is provided with connecting through holes in one-to-one correspondence with the plurality of connecting holes 600. The lower part 62 of the lower beam body fastens the members below to the lower beam body 46 through threads and projection welding nuts 451 fixed at the connecting through holes. Similarly, the lower reinforcing plate 621 is fixedly connected to the lower part 62 of the lower beam body by the riveting piece 452.

The integrated beam body is designed in two parts, the upper beam body 45 and the lower beam body 46, which are staggered along a front-and-rear direction, and the upper beam body and the lower beam body are integrally connected through the intermediate connecting plate 450. With provision of the top mounting part of the upper beam body 45 and the bottom connecting part of the lower beam body 46, the vehicle seats above and the lower housing 30 of the battery pack below can be fixedly connected to the integrated beam body, so that a housing of the battery pack and a frame of the vehicle body can be integrally connected, and the integrated beam body can bear assembly of the housing of the battery pack while exerting basic bearing and connecting functions, and is suitable for being arranged in the housing of the battery pack integrated with the vehicle body.

As for provision of the integrated beam body, as shown in FIG. 4, the reinforced longitudinal beam 50 includes a longitudinal beam front section 501 and a longitudinal beam rear section 502 which are respectively connected to a front side and a rear side of the lower beam body 46. The rear transverse beam 402 of the front seat adopts a structure of upper and lower beam bodies, which can effectively reduce occupation of an internal space of the battery pack by the transverse beam 40. Moreover, provision of the lower beam body 46 provides a good assembly condition for connection of the transverse beam with the reinforcing longitudinal beam 50 and the lower housing 30 of the battery pack.

Meanwhile, the lower housing 30 of the battery pack can be connected to the lower beam body 46. The lower housing 30 of the battery pack and respective floor panel 31 may also be selectively or all connected to the reinforcing longitudinal beam 50. By connecting the transverse beam 40 and the reinforcing longitudinal beam 50 with the lower housing 30 of the battery pack and the floor panel 31, overall structural strength of the housing of the battery pack can be effectively improved in the a height direction of the vehicle.

For an arrangement structure of the lower housing 30 of the battery pack, it may be an integrally formed box structure, or a reinforcing frame can be added. As shown in FIG. 3, the lower housing 30 of the battery pack includes a frame 301, a plurality of support beams 302 connected in the frame 301, and a bottom plate 303 connected to the frame 301 and respective support beams 302. The frame 301 is configured to be connected to the sill beam 100 and the overlap beam 20. The support beam 302 is configured to be connected to the lower beam body 46 and the reinforcing longitudinal beam 50. The support beams 302 may be arranged in a transverse or longitudinal direction.

The frame 301 and the support beams 302 are provided in the lower housing 30 of the battery pack, which can improve strength of the lower housing 30 of the battery pack, and the support beams 302 and the frame 301 are connected to the lower beam body 46, the reinforcing longitudinal beam 50, the overlap beam 20, the sill beam 100, etc., which can effectively fix the lower housing 30 of the battery pack on the frame of the vehicle body, thus ensuring bearing performance of the housing of the battery pack.

In addition, as shown in FIG. 1, floor panels 31 are respectively arranged between a overlap beam 20 at a front end and the front transverse beam 401 of the front seat, between a overlap beam 20 at a rear end and the connecting transverse beam 403 of the rear floor, and between the front transverse beam 401 of the front seat, the rear transverse beam 402 of the front seat and the connecting transverse beam 403 of the rear floor. In order to improve strength of the floor panel 31, a reinforcing rib 310 is constructed and formed on the floor panel 31. Certainly, reinforcing ribs 310 with different patterns can be constructed, and the reinforcing ribs 310 can also be arranged on a part of the floor panels 31 or a part of a same floor panel 31. In this way, a friction force on an upper surface of the floor panel 31 can be improved, which facilitates maintenance of stability of coverings in a vehicle cabin at its laying position.

For the lower vehicle-body middle structure, the outer housing of the battery pack is constructed by the sill beams 100, the overlap beams 20, the transverse beam 40, the lower housing 30 of the battery pack and the floor panel 31 together. The sill beams 100, the overlap beams 20 and the transverse beam 40 constitute a bearing frame of the battery pack, and combined with arrangement of the reinforcing longitudinal beam 50, overall bearing strength of the battery pack is guaranteed. The floor panel 31 not only exerts original floor function, but also serves as an upper cover of the battery pack, which improves utilization of space and has good overall strength and space effect, thus providing a good housing arrangement structure of the battery pack integrated with the vehicle body.

With above arrangement, the battery pack and the vehicle body are integrated into a part assembly, and an upper cover plate and a corresponding frame beam of the battery pack are replaced with the vehicle body, thus achieving purposes of reducing weight of the battery pack, expanding an arrangement space of cells inside the battery pack, and the like. In an assembly process, by mounting sealing parts at matching parts such as the floor panel 31, the sill beam 100, the overlap beam 20, the transverse beam 40 and the lower housing 30 of the battery pack, sealing performance of a battery pack structure can be well realized.

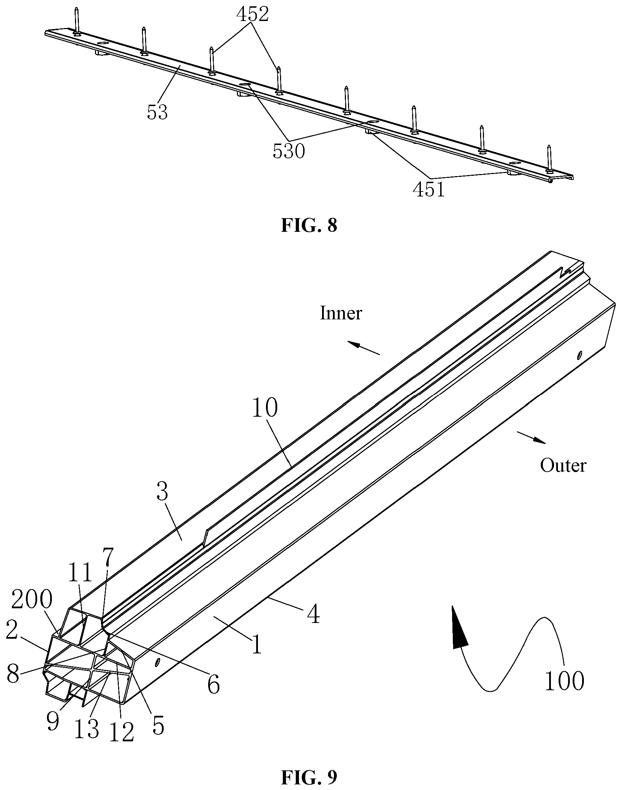

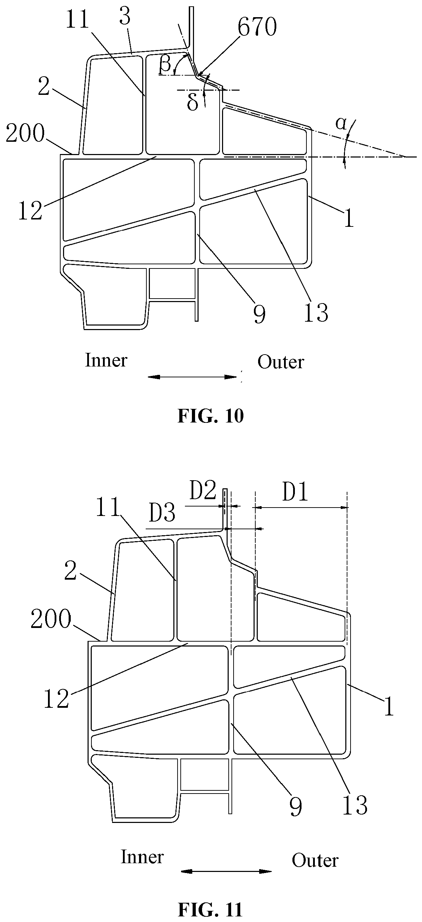

In addition, as shown in FIG. 9 combined with FIG. 10, in order to improve good supporting, assembling and protective performance of the sill beam 100 in the housing of the battery pack structure, the sill beam 100 adopts a following structural form.

In an upper structure of a sill beam body of the sill beam 100, a first top wall 5, a second top wall 6 and a third top wall 7 are arranged sequentially in an inward direction from an outer side of the sill beam body.

One side of the first top wall 5 is connected to an outer side wall 1 of the sill beam body, the other side of the first top wall is connected to one side of the second top wall 6 through a first vertical rib 8, and the other side of the second top wall 6 is connected to one side of the third top wall 7, and the other side of the third top wall 7 is connected to a top 3 of the sill beam body.

In addition, a bottom end of the first vertical rib 8 is connected to a first transverse rib 12 located in the sill beam body. The first top wall 5, the second top wall 6 and the third top wall 7 are all arranged to be inclined, and upward inclination angles of the first top wall 5, the second top wall 6 and the third top wall 7 increase sequentially.

In addition, an upper part of the above sill beam body specifically refers to a part above the sill beam body, and the top 3 is a top part of the upper part, and the first top wall 5, the second top wall 6 and the third top wall 7 are partial structures that constitute the top 3.

The upward inclination angles of the first top wall 5, the second top wall 6 and the third top wall 7 are respectively included angles of the first top wall 5, the second top wall 6 and the third top wall 7 relative to a horizontal direction in a state shown in FIG. 10, and the horizontal direction here also refers to an arrangement mode of the first transverse rib 12. In addition, the inclination angle of the first top wall 5 is referred to be α, the inclination angle of the second top wall 6 is referred to be β, and the inclination angle of the third top wall 7 is referred to be δ, and in specific implementation, as a preference, α, β and δ are all set to be greater than 15°.

Preferably, a second vertical rib 9 is also provided in the sill beam body, and the second vertical rib 9 is located below the first transverse rib 12 and connected to the first vertical rib 8 through the first transverse rib 12. Meanwhile, the second vertical rib 9 is vertically aligned with a connection point 670 between the second top wall 6 and the third top wall 7 in an up-and-down direction.

As a further arrangement, the top 3 of the sill beam body is provided with a third vertical rib 10, and a side of the third top wall 7 connected to the top 3 of the sill beam body is connected to the third vertical rib 10. In a specific structure, as a better design, the third vertical rib 10 is formed on a part of a length of the sill beam body.

By providing the second vertical rib 9 and the third vertical rib 10 above, structural strength of the sill beam body can be further enhanced on a basis of an original structure, so as to ensure that the structural strength of the sill beam body meets actual application requirements.

In addition, based on arrangement of the second vertical rib 9 and the third vertical rib 10 above, as a preference and as shown in FIG. 11, a lateral distance D1 between the outer side wall 1 and the first vertical rib 8, a lateral distance D2 between the first vertical rib 8 and the second vertical rib 9, and a lateral distance D3 between the second vertical rib 9 and the third vertical rib 10 are all not less than 5 mm. In this way, segmented and staggered design among the first vertical rib 8, the second vertical rib 9 and the third vertical rib 10 can be formed, and collapsing and energy absorption effect of the sill beam 100 during collision can be further improved.

Meanwhile, the first vertical rib 8, the second vertical rib 9 and the third vertical rib 10 are designed in a non-through manner, which not only can provide certain structural strength for the sill beam body, but also can cooperate with the segmented and staggered design, so as to further enhance collapse induction and energy absorption effect.

Such non-through design is that as shown in FIG. 9 and FIG. 10, the first vertical rib 8 is connected to a bottom 4 of the sill beam body without penetrating the first transverse rib 12, the second vertical rib 9 is connected to the connection point 670 between the second top wall 6 and the third top wall 7 without penetrating the first transverse rib 12, and the third vertical rib 10 is connected to the bottom 4 of the sill beam body without penetrating the top 3 of the sill beam body.

Moreover, the segmented and staggered design and non-through design of the first vertical rib 8, the second vertical rib 9 and the third vertical rib 10, combined with angle gradual transition design formed among the first top wall 5, the second top wall 6 and the third top wall 7, can further enhance collapse induction and energy absorption effect compared with independent use of the two designs.

In addition, a first inclined rib 13 is arranged in the sill beam body, which not only can ensure structural strength of the sill beam body, but also can be designed at a certain angle with a direction of a collision stress, and can be matched with the angle gradual transition design formed among the first top wall 5, the second top wall 6 and the third top wall 7, so as to further improve the collapse induction effect.

As shown in FIG. 9, the first inclined rib 13 is located below the first transverse rib 12, and the first inclined rib 13 and the second vertical rib 9 intersect. Meanwhile, a fourth vertical rib 11 located inside the third top wall 7 is further provided in the sill beam body, and a top end of the fourth vertical rib 11 is connected to the top 3 of the sill beam body, and a bottom end of the fourth vertical rib 11 is connected to the first transverse rib 12. The fourth vertical rib 11 can be matched with the first vertical rib 8, the second vertical rib 9 and the third vertical rib 10, so as to form the above segmented and staggered design and non-through design while ensuring the structural strength of the sill beam body, and obtain corresponding use effect.

As a preference, a lap boss 200 of the floor transverse beam is formed at an inner side of the sill beam body, so as to reduce or prevent the sill beam 100 from overturning and invading into the battery pack located at the inner side in a case of side impact. As a further arrangement, an inner side wall 2 of the sill beam body located at the lap boss 200 of the floor transverse beam, that is, the inner side wall 2 located above the first transverse rib 12 as shown in FIG. 10, is arranged to be inclined outward, so as to facilitate lapping between the transverse beam 40 and the lap boss 200 of the floor transverse beam.

In the sill beam, the first top wall 5, the second top wall 6, and the third top wall 7 are all arranged to be inclined, so that the first top wall 5, the second top wall 6, and the third top wall 7 can be designed at a certain angle with the direction of the collision stress, and then the sill beam 100 can be ensured to have good supporting strength, based on which collapse induction and energy absorption effect can be formed.

Meanwhile, by increasing the inclination angles sequentially, an angle gradual transition design can be formed between the inclination angles, so that the collapse induction and energy absorption effect can be further improved, and collapse and energy absorption effect of the sill beam 100 can be effectively improved.

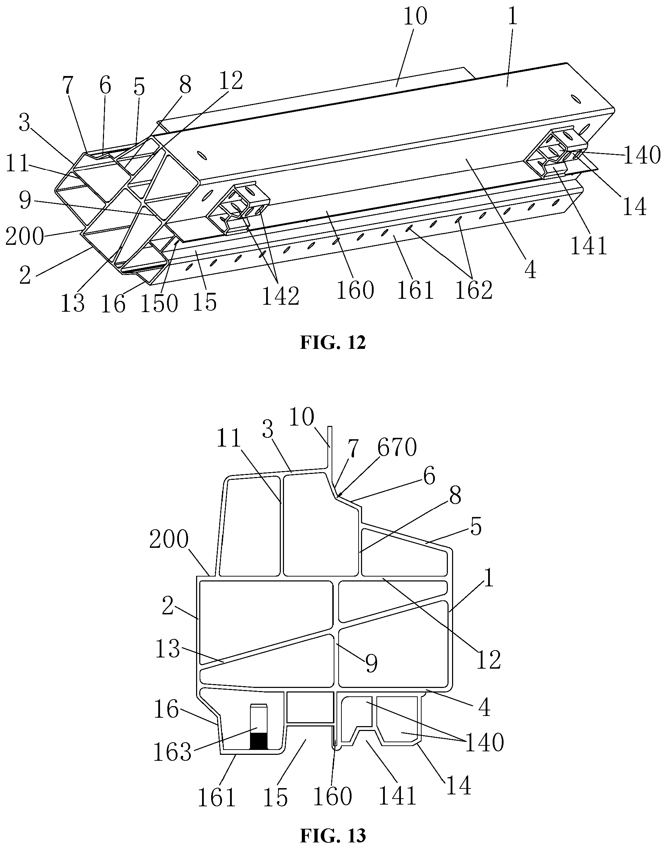

As shown in FIG. 12 and FIG. 13, a lifting pad 14 and a fixing groove 15 for a brake pipe are simultaneously provided at the bottom 4 of the sill beam body. By reasonably arranging the lifting pad 14 at the bottom 4 of the sill beam body, it not only provides a good solution for assembly and arrangement of the lifting pad 14 on the sill beam 100, but also helps to improve bearing performance of the sill beam body when lifting the vehicle. Provision of the fixing groove 15 for the brake pipe provides a reasonable space and installation conditions for arrangement of the brake pipe, which is beneficial to improve matching effect of the sill beam 100 with its surrounding components and functioning of the sill beam 100 in assembly.

The lifting pad 14 is arranged close to the outer side of the sill beam body, and a plurality of lifting pads 14 are arranged at intervals along a length direction of the sill beam body. Preferably, there are two lifting pads 14 arranged at intervals, and the two lifting pads 14 are arranged corresponding to two application points acting on the sill beam when lifting the vehicle.

An interior of the lifting pad 14 is hollow and is divided into a plurality of cavities 140. These cavities 140 are arranged sequentially in an inward direction from the outer side of the sill beam body. With the plurality of cavities 140 being provided on the lifting pad 14, deformation and buffering performance of the lifting pad 14 can be improved, which is beneficial to reducing self-weight of the lifting pad 14. Meanwhile, the lifting pad 14 can be further provided with a plurality of through holes 142 to communicate outside with inside of the cavity 140 or to communicate adjacent cavities 140, which is beneficial to further improving the deformation and buffering effect of the lifting pad 14.

In addition, a bottom of the lifting pad 14 is recessed to form a groove 141. By arranging the groove 141 at the bottom of the lifting pad 14, a lifting position for a vehicle lifting device can be limited, so as to reduce a risk of the vehicle falling off the lifting device and improve safety when the vehicle is lifted.

It should be noted that there is no necessary correlation between the groove 141 and the through hole 142, and only one or both of the groove and the through hole can be provided.

The lifting pad 14 can be made of steel or rubber. The lifting pad 14 is made of aluminum alloy profiles. Being made of aluminum alloy profiles, it has characteristics of convenient processing and construction and light-weighting; and connection and assembly between the lifting pad 14 and the sill beam body can be facilitated. For example, when the sill beam body is also made of aluminum alloy profiles, the lifting pad and the sill beam body can be directly fixed integrally by welding.

As shown in FIG. 12 and FIG. 13, the above fixing groove 15 for the brake pipe is arranged at the inner side of the lifting pad 14 and penetrates the whole sill beam body along the length direction of the sill beam body. Meanwhile, a notch of the fixing groove 15 for the brake pipe points below the sill beam body, and a fixing part for fixing the brake pipe is arranged in the fixing groove 15 for the brake pipe.

Specifically, the fixing part can take a form of fixing holes 150, that is, a plurality of fixing holes 150 are defined at a top of the fixing groove 15 for the brake pipe, and respective fixing holes 150 are arranged at intervals along a length direction of the fixing groove 15 for the brake pipe. In this way, processing and configuration can be facilitated, and the brake pipe can be conveniently fixed in the fixing groove 15 for the brake pipe by clamping, screwing or the like.

Meanwhile, a lower convex part 16 and a lower side plate 160 can also be provided at the bottom 4 of the sill beam body. A preferred specific structural arrangement is that the lower convex part 16 is close to the inner side of the sill beam body, that is, close to below the inner side wall 2. In addition, a mounting part for mounting a bottom tray of the battery pack is provided at a bottom end 161 of the lower convex part 16. By arranging the lower convex part 16 at a side of the bottom 4 of the sill beam body close to the inner side, and arranging the mounting part for mounting the bottom tray of the battery pack on the lower convex part 16, a good mounting condition can be provided for arrangement and mounting of the battery pack below a floor of the cabin.

The mounting part here can also adopt a structure of openings, that is, the mounting part includes a plurality of insertion holes 162 arranged at the bottom end 161 of the lower convex part 16, and respective insertion holes 162 are arranged at intervals along the length direction of the sill beam body. With such an opening structure, processing and configuration can be facilitated, and the bottom tray of the battery pack can be firmly fixed to the sill beam by screwing or the like. Based on arrangement of the insertion holes 162, a mounting sleeve 163 can be fixedly provided in the lower convex part 16 corresponding to respective through holes 162. In this way, connection strength and load-bearing performance of a part where the insertion hole 162 is located can be effectively improved.

With reference to the lower convex portion 16, the lower side plate 160 is located at an outer side of the lower convex portion 16 and arranged opposite to the lower convex portion 16, and the fixing groove 15 for the brake pipe is formed between the lower convex portion 16 and the lower side plate 160. In this way, the mounting part, the fixing groove 15 for the brake pipe and the lifting pad 14 are sequentially arranged at the bottom 4 of the sill beam body from inside to outside, so that the sill beam provides a good condition for mounting and arrangement of surrounding components while functioning in connecting and bearing, thereby enhancing functioning of the sill beam in assembly.

Finally, the invention also relates to a vehicle, a body of which is provided with the lower vehicle-body middle structure as described above.

## Claims

1. A lower vehicle-body middle structure, wherein the lower vehicle-body middle structure comprises:
sill beams (100) respectively arranged at two sides, at least two overlap beams (20) connected between the sill beams (100) at the two sides, a lower housing (30) of a battery pack connected to bottoms of respective sill beams (100) and respective overlap beams (20), and transverse beams (40) connected between the sill beams (100) at the two sides arranged at intervals between the sill beams (100) at the two sides, and floor panels (31) are respectively provided at a front side and a rear side of each transverse beam (40);
the sill beams (100), the overlap beams (20), and the transverse beams (40) constitute a bearing frame of the battery pack, which with the floor panels (31) and the lower housing (30) of the battery pack together form an outer housing of the battery pack integrated with the vehicle-body;
a plurality of top walls are provided at an upper part of each of the sill beams (100) sequentially in an inward direction from an outer side of each of the sill beams (100), and the plurality of top walls are all arranged to be inclined upward, and upward inclination angles of respective top walls increase sequentially; and
at least one of the transverse beams (40) is an integrated beam body, and the integrated beam body comprises an upper beam body (45) and a lower beam body (46) which are integrally connected through an intermediate connecting plate (450), the upper beam body (45) and the lower beam body (46) are staggered along a front-and-rear direction of a vehicle body, and a seat mounting part for mounting a seat is provided at a top of the upper beam body (45), and a connecting part for connecting the lower housing (30) of the battery pack is provided at a bottom of the lower beam body (46).

2. The lower vehicle-body middle structure according to claim 1, wherein
the two overlap beams (20) are respectively connected between front ends (101) of the sill beams (100) at the two sides and between rear ends (102) of the sill beams (100) at the two sides;
a reinforced longitudinal beam (50) arranged parallel to the sill beams (100) is provided in the outer housing of the battery pack; and
a front end and a rear end (102) of the reinforcing longitudinal beam (50) are respectively connected to the overlap beam (20) at a corresponding end.

3. The lower vehicle-body middle structure according to claim 2, wherein
each of the transverse beams (40) comprises a front transverse beam (401) of a front seat, a rear transverse beam (402) of the front seat, and a connecting transverse beam (403) of a rear floor arranged close to the rear ends (102) of the sill beams (100);
the rear transverse beam (402) of the front seat adopts the integrated beam body; and
the reinforced longitudinal beam (50) comprises a longitudinal beam front section (501) and a longitudinal beam rear section (502) which are respectively connected to a front side and a rear side of the lower beam body (46).

4. The lower vehicle-body middle structure according to claim 2, wherein
the lower housing (30) of the battery pack and respective floor panels (31) are connected to the reinforcing longitudinal beam (50), and at least part of the floor panels (31) are formed with a reinforcing rib (310).

5. The lower vehicle-body middle structure according to claim 4, wherein
the lower housing (30) of the battery pack comprises a frame (301), a plurality of support beams (302) connected in the frame (301), and a bottom plate (303) connected to the frame (301) and respective support beams (302);
the frame (301) is connected to the sill beams (100) and the overlap beams (20); and
the support beam (302) is connected to the lower beam body (46) and the reinforcing longitudinal beam (50).

6. The lower vehicle-body middle structure according to claim 1, wherein
the plurality of top walls comprises a first top wall (5), a second top wall (6) and a third top wall (7) which are sequentially arranged from outside to inside;
one side of the first top wall (5) is connected to an outer side wall (1) of the sill beam (100), and the other side of the first top wall (5) is connected to one side of the second top wall (6) through a first vertical rib (8), and a bottom end of the first vertical rib (8) is connected to a first transverse rib (12) located in the sill beam (100); and
the other side of the second top wall (6) is connected to one side of the third top wall (7), and the other side of the third top wall (7) is connected to a top (3) of the sill beam (100).

7. The lower vehicle-body middle structure according to claim 6, wherein
a second vertical rib (9) is provided in each of the sill beams (100), and a third vertical rib (10) is provided at the top (3) of each of the sill beams (100);
the second vertical rib (9) is located below the first transverse rib (12) and connected to the first vertical rib (8) by the first transverse rib (12), and the second vertical rib (9) is aligned with a connection point (670) between the second top wall (6) and the third top wall (7) in an up-and-down direction; and
a side of the third top wall (7) connected to the top (3) of the sill beam (100) is connected to the third vertical rib (10).

8. The lower vehicle-body middle structure according to claim 7, wherein
upward inclination angles of the first top wall (5), the second top wall (6) and the third top wall (7) are all greater than 15°; and
a lateral distance between the outer side wall (1) and the first vertical rib (8), a lateral distance between the first vertical rib (8) and the third vertical rib (10), and a lateral distance between the third vertical rib (10) and the second vertical rib (9) are all not less than 5 mm.

9. The lower vehicle-body middle structure according to claim 7, wherein
a first inclined rib (13) and a fourth vertical rib (11) located at an inner side of the third top wall (7) are provided in the sill beam (100);
the first inclined rib (13) is located below the first transverse rib (12), and the first inclined rib (13) and the second vertical rib (9) intersect; and
a top end of the fourth vertical rib (11) is connected to the top (3) of the sill beam (100), and a bottom end of the fourth vertical rib (11) is connected to the first transverse rib (12).

10. The lower vehicle-body middle structure according to claim 1, wherein
a lifting pad (14) is provided at a bottom (4) of the sill beam (100), and a fixing groove (15) for a brake pipe is formed at the bottom (4) of the sill beam (100);
the lifting pad (14) is arranged close to the outer side of the sill beam (100), and a plurality of lifting pads are arranged at intervals along a length direction of the sill beam (100), and the plurality of lifting pads (14) are made of aluminum alloy profiles; and
the fixing groove (15) for the brake pipe is located at an inner side of the lifting pad (14) and penetrates through the sill beam (100) along the length direction of the sill beam (100), and a notch of the fixing groove (15) for the brake pipe points below the sill beam, and a fixing part for fixing the brake pipe is arranged in the fixing groove (15) for the brake pipe.

11. The lower vehicle-body middle structure according to claim 1, wherein
the sill beam (100) is made of aluminum alloy profiles;
a lap boss (200) of a floor transverse beam is provided at an inner side of the sill beam (100); and
ends of respective transverse beams (40) are lapped on the lap boss.

12. The lower vehicle-body middle structure according to any one of claims 1 to 11, wherein
the upper beam body (45) is buckled on the intermediate connecting plate (450) and encloses with the intermediate connecting plate (450) to form an upper cavity (51), and the mounting part comprises a plurality of mounting holes (510) provided at a top end of the upper beam body (45).

13. The lower vehicle-body middle structure according to claim 12, wherein
the lower beam body (46) comprises an upper part (61) of the lower beam body buckled on the intermediate connecting plate (450) and a lower part (62) of the lower beam body buckled on a bottom of the upper part (61) of the lower beam body, and a length of the lower part (62) of the lower beam body is less than a length of the upper part (61) of the lower beam body;
the upper part (61) of the lower beam body and the intermediate connecting plate (450) enclose to form a first lower cavity (611), and the lower part (62) of the lower beam body and the upper part (61) of the lower beam body enclose to form a second lower cavity (612); and
the connecting part comprises a plurality of connecting holes (600) provided on a bottom end of the lower part (62) of the lower beam body.

14. The lower vehicle-body middle structure according to claim 13, wherein
an upper reinforcing plate (53) is fixedly connected in the upper beam body (45), and the upper reinforcing plate (53) is provided with mounting through holes (530) in one-to-one correspondence with the plurality of mounting holes (510);
a lower reinforcing plate (621) is fixedly connected in the lower part (62) of the lower beam body, and the lower reinforcing plate (621) is provided with connecting through holes in one-to-one correspondence with the plurality of connecting holes (600); and
a projection welding nut (451) is fixedly provided at respective mounting through holes (530) and/or connecting holes (600).

15. A vehicle, wherein a body of the vehicle has the lower vehicle-body middle structure according to any one of claims 1 to 14.

## Patentansprüche

1. Untere Fahrzeugkarosseriemittelstruktur, wobei die untere Fahrzeugkarosseriemittelstruktur aufweist:
Schwellerträger (100), die jeweils an zwei Seiten angeordnet sind, mindestens zwei Überlappungsträger (20), die zwischen den Schwellerträgern (100) an den zwei Seiten verbunden sind, ein unteres Gehäuse (30) eines Batteriepakets, das mit Unterseiten der jeweiligen Schwellerträger (100) und der jeweiligen Überlappungsträger (20) verbunden ist, und Querträger (40), die zwischen den Schwellerträgern (100) an den zwei Seiten verbunden und in Abständen zwischen den Schwellerträgern (100) an den zwei Seiten angeordnet sind, und Bodenpaneele (31) jeweils an einer Vorderseite und einer Rückseite jedes Querträgers (40) vorgesehen sind;
die Schwellerträger (100), die Überlappungsträger (20) und die Querträger (40) einen Tragrahmen des Batteriepakets darstellen, der zusammen mit den Bodenpaneelen (31) und dem unteren Gehäuse (30) des Batteriepakets ein äußeres Gehäuse des Batteriepakets bildet, das mit der Fahrzeugkarosserie integriert ist;
mehrere Oberwände an einem oberen Teil jedes der Schwellerträger (100) nacheinander in einer Richtung nach innen von einer Außenseite jedes der Schwellerträger (100) vorgesehen sind und die mehreren Oberwände alle nach oben geneigt angeordnet sind und Aufwärtsneigungswinkel der jeweiligen Oberwände nacheinander zunehmen; und
mindestens einer der Querträger (40) ein integrierter Trägerkörper ist und der integrierte Trägerkörper einen oberen Trägerkörper (45) und einen unteren Trägerkörper (46) aufweist, die über eine Zwischenverbindungsplatte (450) integral verbunden sind, der obere Trägerkörper (45) und der untere Trägerkörper (46) entlang einer Vorne-Hinten-Richtung einer Fahrzeugkarosserie versetzt sind und ein Sitzmontageteil zum Montieren eines Sitzes an einer Oberseite des oberen Trägerkörpers (45) vorgesehen ist und ein Verbindungsteil zum Verbinden des unteren Gehäuses (30) des Batteriepakets an einer Unterseite des unteren Trägerkörpers (46) vorgesehen ist.

2. Untere Fahrzeugkarosseriemittelstruktur nach Anspruch 1, wobei
die zwei Überlappungsträger (20) jeweils zwischen vorderen Enden (101) der Schwellerträger (100) an den zwei Seiten und zwischen hinteren Enden (102) der Schwellerträger (100) an den zwei Seiten verbunden sind;
ein verstärkter Längsträger (50), der parallel zu den Schwellerträgern (100) angeordnet ist, in dem äußeren Gehäuse des Batteriepakets vorgesehen ist; und
ein vorderes Ende und ein hinteres Ende (102) des verstärkenden Längsträgers (50) jeweils mit dem Überlappungsträger (20) an einem entsprechenden Ende verbunden sind.

3. Untere Fahrzeugkarosseriemittelstruktur nach Anspruch 2, wobei
jeder der Querträger (40) einen vorderen Querträger (401) eines Vordersitzes, einen hinteren Querträger (402) des Vordersitzes und einen Verbindungsquerträger (403) eines hinteren Bodens, der nahe den hinteren Enden (102) der Schwellerträger (100) angeordnet ist, aufweist;
der hintere Querträger (402) des Vordersitzes den integrierten Trägerkörper verwendet; und
der verstärkte Längsträger (50) einen Längsträgervorderabschnitt (501) und einen Längsträgerhinterabschnitt (502) aufweist, die jeweils mit einer Vorderseite und einer Rückseite des unteren Trägerkörpers (46) verbunden sind.

4. Untere Fahrzeugkarosseriemittelstruktur nach Anspruch 2, wobei
das untere Gehäuse (30) des Batteriepakets und die jeweiligen Bodenpaneele (31) mit dem verstärkenden Längsträger (50) verbunden sind und mindestens ein Teil der Bodenpaneele (31) mit einer Verstärkungsrippe (310) ausgebildet ist.

5. Untere Fahrzeugkarosseriemittelstruktur nach Anspruch 4, wobei
das untere Gehäuse (30) des Batteriepakets einen Rahmen (301), mehrere Stützträger (302), die in dem Rahmen (301) verbunden sind, und eine Bodenplatte (303), die mit dem Rahmen (301) und den jeweiligen Stützträgern (302) verbunden ist, aufweist;
der Rahmen (301) mit den Schwellerträgern (100) und den Überlappungsträgern (20) verbunden ist; und
der Stützträger (302) mit dem unteren Trägerkörper (46) und dem verstärkenden Längsträger (50) verbunden ist.

6. Untere Fahrzeugkarosseriemittelstruktur nach Anspruch 1, wobei
die mehreren Oberwände eine erste Oberwand (5), eine zweite Oberwand (6) und eine dritte Oberwand (7) aufweisen, die nacheinander von außen nach innen angeordnet sind;
eine Seite der ersten Oberwand (5) mit einer äußeren Seitenwand (1) des Schwellerträgers (100) verbunden ist und die andere Seite der ersten Oberwand (5) über eine erste Vertikalrippe (8) mit einer Seite der zweiten Oberwand (6) verbunden ist und ein unteres Ende der ersten Vertikalrippe (8) mit einer ersten Querrippe (12), die sich in dem Schwellerträger (100) befindet, verbunden ist; und
die andere Seite der zweiten Oberwand (6) mit einer Seite der dritten Oberwand (7) verbunden ist und die andere Seite der dritten Oberwand (7) mit einer Oberseite (3) des Schwellerträgers (100) verbunden ist.

7. Untere Fahrzeugkarosseriemittelstruktur nach Anspruch 6, wobei
eine zweite Vertikalrippe (9) in jedem der Schwellerträger (100) vorgesehen ist und eine dritte Vertikalrippe (10) an der Oberseite (3) jedes der Schwellerträger (100) vorgesehen ist;
die zweite Vertikalrippe (9) sich unterhalb der ersten Querrippe (12) befindet und durch die erste Querrippe (12) mit der ersten Vertikalrippe (8) verbunden ist und die zweite Vertikalrippe (9) in einer Oben-Unten-Richtung mit einem Verbindungspunkt (670) zwischen der zweiten Oberwand (6) und der dritten Oberwand (7) ausgerichtet ist; und
eine Seite der dritten Oberwand (7), die mit der Oberseite (3) des Schwellerträgers (100) verbunden ist, mit der dritten Vertikalrippe (10) verbunden ist.

8. Untere Fahrzeugkarosseriemittelstruktur nach Anspruch 7, wobei
Aufwärtsneigungswinkel der ersten Oberwand (5), der zweiten Oberwand (6) und der dritten Oberwand (7) alle größer als 15° sind; und
ein seitlicher Abstand zwischen der äußeren Seitenwand (1) und der ersten Vertikalrippe (8), ein seitlicher Abstand zwischen der ersten Vertikalrippe (8) und der dritten Vertikalrippe (10) und ein seitlicher Abstand zwischen der dritten Vertikalrippe (10) und der zweiten Vertikalrippe (9) alle nicht kleiner als 5 mm sind.

9. Untere Fahrzeugkarosseriemittelstruktur nach Anspruch 7, wobei
eine erste Schrägrippe (13) und eine vierte Vertikalrippe (11), die sich an einer Innenseite der dritten Oberwand (7) befindet, in dem Schwellerträger (100) vorgesehen sind;
die erste Schrägrippe (13) sich unterhalb der ersten Querrippe (12) befindet und die erste Schrägrippe (13) und die zweite Vertikalrippe (9) einander schneiden; und
ein oberes Ende der vierten Vertikalrippe (11) mit der Oberseite (3) des Schwellerträgers (100) verbunden ist und ein unteres Ende der vierten Vertikalrippe (11) mit der ersten Querrippe (12) verbunden ist.

10. Untere Fahrzeugkarosseriemittelstruktur nach Anspruch 1, wobei
eine Hebeauflage (14) an einer Unterseite (4) des Schwellerträgers (100) vorgesehen ist und eine Bremsleitungsbefestigungsnut (15) an der Unterseite (4) des Schwellerträgers (100) ausgebildet ist;
die Hebeauflage (14) nahe der Außenseite des Schwellerträgers (100) angeordnet ist und mehrere Hebeauflagen in Abständen entlang einer Längsrichtung des Schwellerträgers (100) angeordnet sind und die mehreren Hebeauflagen (14) aus Aluminiumlegierungsprofilen hergestellt sind; und
die Bremsleitungsbefestigungsnut (15) sich an einer Innenseite der Hebeauflage (14) befindet und den Schwellerträger (100) entlang der Längsrichtung des Schwellerträgers (100) durchdringt und eine Kerbe der Bremsleitungsbefestigungsnut (15) nach unterhalb des Schwellerträgers gerichtet ist und ein Befestigungsteil zum Befestigen der Bremsleitung in der Bremsleitungsbefestigungsnut (15) angeordnet ist.

11. Untere Fahrzeugkarosseriemittelstruktur nach Anspruch 1, wobei
der Schwellerträger (100) aus Aluminiumlegierungsprofilen hergestellt ist;
ein Überlappungsvorsprung (200) eines Bodenquerträgers an einer Innenseite des Schwellerträgers (100) vorgesehen ist; und
Enden der jeweiligen Querträger (40) auf dem Überlappungsvorsprung überlappt sind.

12. Untere Fahrzeugkarosseriemittelstruktur nach einem der Ansprüche 1 bis 11, wobei
der obere Trägerkörper (45) auf die Zwischenverbindungsplatte (450) aufgesetzt ist und mit der Zwischenverbindungsplatte (450) einen oberen Hohlraum (51) umschließt und das Montageteil mehrere Montagelöcher (510) aufweist, die an einem oberen Ende des oberen Trägerkörpers (45) vorgesehen sind.

13. Untere Fahrzeugkarosseriemittelstruktur nach Anspruch 12, wobei
der untere Trägerkörper (46) einen oberen Teil (61) des unteren Trägerkörpers, der auf die Zwischenverbindungsplatte (450) aufgesetzt ist, und einen unteren Teil (62) des unteren Trägerkörpers, der auf eine Unterseite des oberen Teils (61) des unteren Trägerkörpers aufgesetzt ist, aufweist und eine Länge des unteren Teils (62) des unteren Trägerkörpers kleiner als eine Länge des oberen Teils (61) des unteren Trägerkörpers ist;
der obere Teil (61) des unteren Trägerkörpers und die Zwischenverbindungsplatte (450) einen ersten unteren Hohlraum (611) umschließen und der untere Teil (62) des unteren Trägerkörpers und der obere Teil (61) des unteren Trägerkörpers einen zweiten unteren Hohlraum (612) umschließen; und
das Verbindungsteil mehrere Verbindungslöcher (600) aufweist, die an einem unteren Ende des unteren Teils (62) des unteren Trägerkörpers vorgesehen sind.

14. Untere Fahrzeugkarosseriemittelstruktur nach Anspruch 13, wobei
eine obere Verstärkungsplatte (53) fest in dem oberen Trägerkörper (45) verbunden ist und die obere Verstärkungsplatte (53) mit Montagedurchgangslöchern (530) in Eins-zu-Eins-Entsprechung zu den mehreren Montagelöchern (510) versehen ist;
eine untere Verstärkungsplatte (621) fest in dem unteren Teil (62) des unteren Trägerkörpers verbunden ist und die untere Verstärkungsplatte (621) mit Verbindungsdurchgangslöchern in Eins-zu-Eins-Entsprechung zu den mehreren Verbindungslöchern (600) versehen ist; und
eine Buckelschweißmutter (451) fest an den jeweiligen Montagedurchgangslöchern (530) und/oder Verbindungslöchern (600) vorgesehen ist.

15. Fahrzeug, wobei eine Karosserie des Fahrzeugs die untere Fahrzeugkarosseriemittelstruktur nach einem der Ansprüche 1 bis 14 aufweist.

## Revendications

1. Structure intermédiaire inférieure de carrosserie de véhicule, dans laquelle la structure intermédiaire inférieure de carrosserie de véhicule comprend :
des poutres de bas de caisse (100) qui sont respectivement disposées au niveau de deux côtés, au moins deux poutres de recouvrement (20) qui sont connectées entre les poutres de bas de caisse (100) au niveau des deux côtés, un caisson inférieur (30) d'un pack de batterie qui est connecté à des parties inférieures de poutres de bas de caisse (100) respectives et de poutres de recouvrement (20) respectives, et des poutres transversales (40) qui sont connectées entre les poutres de bas de caisse (100) au niveau des deux côtés et qui sont disposées selon des intervalles entre les poutres de bas de caisse (100) au niveau des deux côtés, et des panneaux de plancher (31) qui sont respectivement prévus au niveau d'un côté avant et au niveau d'un côté arrière de chaque poutre transversale (40) ;
les poutres de bas de caisse (100), les poutres de recouvrement (20) et les poutres transversales (40) constituent une structure de support du pack de batterie, laquelle, de façon conjointe avec les panneaux de plancher (31) et le caisson inférieur (30) du pack de batterie, forme un caisson externe du pack de batterie qui est intégré à la carrosserie de véhicule ;
une pluralité de parois supérieures sont prévues au niveau d'une partie supérieure de chacune des poutres de bas de caisse (100), de façon séquentielle dans une direction vers l'intérieur depuis un côté externe de chacune des poutres de bas de caisse (100), et les parois supérieures de la pluralité de parois supérieures sont toutes disposées de manière à ce qu'elles soient inclinées vers le haut, et des angles d'inclinaison vers le haut de parois supérieures respectives augmentent de façon séquentielle ; et
au moins l'une des poutres transversales (40) est un corps de poutre intégré, et le corps de poutre intégré comprend un corps de poutre supérieur (45) et un corps de poutre inférieur (46) qui sont connectés d'un seul tenant par l'intermédiaire d'une plaque de connexion intermédiaire (450), le corps de poutre supérieur (45) et le corps de poutre inférieur (46) sont décalés l'un par rapport à l'autre suivant une direction avant-arrière d'une carrosserie de véhicule, et une partie de montage de siège destinée au montage d'un siège est prévue au niveau d'une partie supérieure du corps de poutre supérieur (45), et une partie de connexion destinée à connecter le caisson inférieur (30) du pack de batterie est prévue au niveau d'une partie inférieure du corps de poutre inférieur (46).

2. Structure intermédiaire inférieure de carrosserie de véhicule selon la revendication 1, dans laquelle :
les deux poutres de recouvrement (20) sont respectivement connectées entre des extrémités avant (101) des poutres de bas de caisse (100) au niveau des deux côtés et entre des extrémités arrière (102) des poutres de bas de caisse (100) au niveau des deux côtés ;
une poutre longitudinale de renforcement (50) qui est disposée parallèlement aux poutres de bas de caisse (100) est prévue dans le caisson externe du pack de batterie ; et
une extrémité avant et une extrémité arrière (102) de la poutre longitudinale de renforcement (50) sont respectivement connectées à la poutre de recouvrement (20) au niveau d'une extrémité correspondante.

3. Structure intermédiaire inférieure de carrosserie de véhicule selon la revendication 2, dans laquelle :
chacune des poutres transversales (40) comprend une poutre transversale avant (401) d'un siège avant, une poutre transversale arrière (402) du siège avant et une poutre transversale de connexion (403) d'un plancher arrière qui est disposée à proximité des extrémités arrière (102) des poutres de bas de caisse (100) ;
la poutre transversale arrière (402) du siège avant adopte le corps de poutre intégré ; et
la poutre longitudinale de renforcement (50) comprend une section avant (501) de poutre longitudinale et une section arrière (502) de poutre longitudinale qui sont respectivement connectées à un côté avant et à un côté arrière du corps de poutre inférieur (46).

4. Structure intermédiaire inférieure de carrosserie de véhicule selon la revendication 2, dans laquelle :
le caisson inférieur (30) du pack de batterie et des panneaux de plancher (31) respectifs sont connectés à la poutre longitudinale de renforcement (50), et les panneaux de plancher d'au moins une partie des panneaux de plancher (31) sont formés de manière à être munis d'une nervure de renforcement (310).

5. Structure intermédiaire inférieure de carrosserie de véhicule selon la revendication 4, dans laquelle :
le caisson inférieur (30) du pack de batterie comprend un cadre (301), une pluralité de poutres de support (302) qui sont connectées dans le cadre (301) et une plaque inférieure (303) qui est connectée au cadre (301) et à des poutres de support (302) respectives ;
le cadre (301) est connecté aux poutres de bas de caisse (100) et aux poutres de recouvrement (20) ; et
la poutre de support (302) est connectée au corps de poutre inférieur (46) et à la poutre longitudinale de renforcement (50).

6. Structure intermédiaire inférieure de carrosserie de véhicule selon la revendication 1, dans laquelle :
la pluralité de parois supérieures comprend une première paroi supérieure (5), une deuxième paroi supérieure (6) et une troisième paroi supérieure (7) qui sont disposées de façon séquentielle de l'extérieur vers l'intérieur ;
un côté de la première paroi supérieure (5) est connecté à une paroi latérale externe (1) de la poutre de bas de caisse (100) et l'autre côté de la première paroi supérieure (5) est connecté à un côté de la deuxième paroi supérieure (6) par l'intermédiaire d'une première nervure verticale (8), et une extrémité inférieure de la première nervure verticale (8) est connectée à une première nervure transversale (12) qui est située dans la poutre de bas de caisse (100) ; et
l'autre côté de la deuxième paroi supérieure (6) est connecté à un côté de la troisième paroi supérieure (7) et l'autre côté de la troisième paroi supérieure (7) est connecté à une partie supérieure (3) de la poutre de bas de caisse (100).

7. Structure intermédiaire inférieure de carrosserie de véhicule selon la revendication 6, dans laquelle :
une deuxième nervure verticale (9) est prévue dans chacune des poutres de bas de caisse (100) et une troisième nervure verticale (10) est prévue au niveau de la partie supérieure (3) de chacune des poutres de bas de caisse (100) ;
la deuxième nervure verticale (9) est située au-dessous de la première nervure transversale (12) et est connectée à la première nervure verticale (8) par l'intermédiaire de la première nervure transversale (12) et la deuxième nervure verticale (9) est alignée avec un point de connexion (670) entre la deuxième paroi supérieure (6) et la troisième paroi supérieure (7) dans une direction verticale ; et
un côté de la troisième paroi supérieure (7) qui est connecté à la partie supérieure (3) de la poutre de bas de caisse (100) est connecté à la troisième nervure verticale (10).

8. Structure intermédiaire inférieure de carrosserie de véhicule selon la revendication 7, dans laquelle :
les angles d'inclinaison vers le haut de la première paroi supérieure (5), de la deuxième paroi supérieure (6) et de la troisième paroi supérieure (7) sont tous supérieurs à 15° ; et
une distance latérale entre la paroi latérale externe (1) et la première nervure verticale (8), une distance latérale entre la première nervure verticale (8) et la troisième nervure verticale (10) et une distance latérale entre la troisième nervure verticale (10) et la deuxième nervure verticale (9) sont toutes non inférieures à 5 mm.

9. Structure intermédiaire inférieure de carrosserie de véhicule selon la revendication 7, dans laquelle :
une première nervure inclinée (13) et une quatrième nervure verticale (11) qui est située au niveau d'un côté interne de la troisième paroi supérieure (7) sont prévues dans la poutre de bas de caisse (100) ;
la première nervure inclinée (13) est située au-dessous de la première nervure transversale (12) et la première nervure inclinée (13) et la deuxième nervure verticale (9) se croisent ; et
une extrémité supérieure de la quatrième nervure verticale (11) est connectée à la partie supérieure (3) de la poutre de bas de caisse (100) et une extrémité inférieure de la quatrième nervure verticale (11) est connectée à la première nervure transversale (12).

10. Structure intermédiaire inférieure de carrosserie de véhicule selon la revendication 1, dans laquelle :
un patin de levage (14) est prévu au niveau d'une partie inférieure (4) de la poutre de bas de caisse (100) et une rainure de fixation (15) pour une conduite de frein est formée au niveau de la partie inférieure (4) de la poutre de bas de caisse (100) ;
le patin de levage (14) est disposé à proximité du côté externe de la poutre de bas de caisse (100) et les patins de levage d'une pluralité de patins de levage sont disposés selon des intervalles suivant une direction longitudinale de la poutre de bas de caisse (100), et les patins de levage de la pluralité de patins de levage (14) sont réalisés à partir de profilés en alliage d'aluminium ; et
la rainure de fixation (15) pour la conduite de frein est située au niveau d'un côté interne du patin de levage (14) et elle pénètre à travers la poutre de bas de caisse (100) suivant la direction longitudinale de la poutre de bas de caisse (100), et une ouverture de la rainure de fixation (15) pour la conduite de frein est disposée au-dessous de la poutre de bas de caisse, et une partie de fixation destinée à fixer la conduite de frein est disposée dans la rainure de fixation (15) pour la conduite de frein.

11. Structure intermédiaire inférieure de carrosserie de véhicule selon la revendication 1, dans laquelle :
la poutre de bas de caisse (100) est réalisée à partir de profilés en alliage d'aluminium ;
un bossage de chevauchement (200) d'une poutre transversale de plancher est prévu au niveau d'un côté interne de la poutre de bas de caisse (100) ; et
des extrémités de poutres transversales (40) respectives sont en chevauchement sur le bossage de chevauchement.

12. Structure intermédiaire inférieure de carrosserie de véhicule selon l'une quelconque des revendications 1 à 11, dans laquelle :
le corps de poutre supérieur (45) est configuré pour être adapté sur la plaque de connexion intermédiaire (450) et pour délimiter et former, avec la plaque de connexion intermédiaire (450), une cavité supérieure (51), et la partie de montage comprend une pluralité de trous de montage (510) qui sont prévus au niveau d'une extrémité supérieure du corps de poutre supérieur (45).

13. Structure intermédiaire inférieure de carrosserie de véhicule selon la revendication 12, dans laquelle :
le corps de poutre inférieur (46) comprend une partie supérieure (61) du corps de poutre inférieur qui est configurée pour être adaptée sur la plaque de connexion intermédiaire (450) et une partie inférieure (62) du corps de poutre inférieur qui est configurée pour être adaptée sur une partie inférieure de la partie supérieure (61) du corps de poutre inférieur, et une longueur de la partie inférieure (62) du corps de poutre inférieur est inférieure à une longueur de la partie supérieure (61) du corps de poutre inférieur ;
la partie supérieure (61) du corps de poutre inférieur et la plaque de connexion intermédiaire (450) délimitent et forment une première cavité inférieure (611), et la partie inférieure (62) du corps de poutre inférieur et la partie supérieure (61) du corps de poutre inférieur délimitent et forment une seconde cavité inférieure (612) ; et
la partie de connexion comprend une pluralité de trous de connexion (600) qui sont prévus sur une extrémité inférieure de la partie inférieure (62) du corps de poutre inférieur.

14. Structure intermédiaire inférieure de carrosserie de véhicule selon la revendication 13, dans laquelle :
une plaque de renforcement supérieure (53) est connectée de façon fixe dans le corps de poutre supérieur (45), et la plaque de renforcement supérieure (53) est munie de trous traversants de montage (530) selon une correspondance biunivoque avec les trous de montage de la pluralité de trous de montage (510) ;
une plaque de renforcement inférieure (621) est connectée de façon fixe dans la partie inférieure (62) du corps de poutre inférieur, et la plaque de renforcement inférieure (621) est munie de trous traversants de connexion selon une correspondance biunivoque avec les trous de connexion de la pluralité de trous de connexion (600) ; et
un écrou à soudage par projection (451) est prévu de façon fixe au niveau de trous traversants de montage (530) respectifs et/ou au niveau de trous de connexion (600) respectifs.

15. Véhicule, dans lequel une carrosserie du véhicule comprend la structure intermédiaire inférieure de carrosserie de véhicule selon l'une quelconque des revendications 1 à 14.
